# EUROPÄISCHE PATENTSCHRIFT

(11) **EP 1 882 355 B1**
(45) Veröffentlichungstag und Bekanntmachung des Hinweises auf die Patenterteilung: **05.04.2017**
(21) Anmeldenummer: 06707173.8
(22) Anmeldetag: 22.02.2006
(51) Int. Cl.: H04M 1/725, H04M 1/247, H04M 1/22

(54) **BETRIEB EINES IN EINEM TELEKOMMUNIKATIONSNETZ NUTZBAREN ENDGERÄTES**
OPERATION OF A TERMINAL DEVICE THAT CAN BE USED IN A TELECOMMUNICATION NETWORK
FONCTIONNEMENT D'UN TERMINAL UTILISABLE DANS UN RESEAU DE TELECOMMUNICATIONS

(30) Priorität: 20.05.2005 DE 102005023961
(43) Veröffentlichungstag der Anmeldung: 30.01.2008
(73) Patentinhaber: Vodafone Holding GmbH, 40213 Düsseldorf (DE)
(72) Erfinder: LISS, Peter, 11523 Stockholm (SE); GRAHAM, Pullin, ECIR 5DF, London (GB); WEISSERT, Patrick, 40549 Düsseldorf (DE); TOLLEMACHE, Luke, Oxford, OX41YB (GB); DE VOS, Geert, B-1730 Asse (BE); BURHOLT, Adrian, Bromham, Wiltshire SN 15 2DW (GB); LAW, Kwan, 40468 Düsseldorf (DE); VISSER, Jeroen, 40489 Düsseldorf (DE); CURSON, Ian, 50670 Köln (DE)
(74) Vertreter: Weisbrodt, Bernd
(86) Internationale Anmeldenummer: PCT/EP2006/001610
(87) Internationale Veröffentlichungsnummer: WO 2006/122590

(56) Entgegenhaltungen:
- EP-A- 0 872 996
- EP-A- 1 387 241
- GB-A- 2 344 492
- US-A1- 2003 157 970
- US-A1- 2004 198 475
- US-B1- 6 704 004

## Beschreibung

Die vorliegende Erfindung betrifft ein Verfahren zum Betreiben eines in einem Telekommunikationsnetz, vorzugsweise einem Mobilfunknetz, nutzbaren Endgerätes, welches eine Anzeigeeinrichtung zur optischen und/oder akustischen Wiedergabe von Informationen und wenigstens eine Eingabeeinrichtung zur Erfassung von Informationen aufweist, wobei ereignis- und/oder inhaltsgesteuerte Informationen seitens der Anzeigeeinrichtung wiedergegeben werden und wobei die Eingabeeinrichtung wenigstens eine Taste aufweist, durch deren Betätigung wenigstens eine weitergehende Nutzung der ereignis- und/oder inhaltsgesteuerten Informationen ermöglicht wird.

Ferner betrifft die vorliegende Erfindung ein Endgerät zur Nutzung in einem Telekommunikationsnetz, vorzugsweise einem Mobilfunknetz, mit einer Anzeigeeinrichtung zur optischen und/oder akustischen Wiedergabe von Informationen und wenigstens einer Eingabeeinrichtung zur Erfassung von Informationen, wobei ereignis- und/oder inhaltsgesteuerte Informationen seitens der Anzeigeeinrichtung wiedergebbar sind und wobei die Eingabeeinrichtung wenigstens eine Taste aufweist, durch deren Betätigung wenigstens eine weitergehende Nutzung der ereignis- und/oder inhaltsgesteuerten Informationen ermöglicht ist.

Im Stand der Technik sind derartige Verfahren und Endgeräte in zahlreichen Ausgestaltungen und Ausführungsformen bekannt, beispielsweise von Telefonen die in beziehungsweise an einem drahtgebundenen Fernsprechnetz, einem sogenannten Festnetz, betreibbar sind und insbesondere von in digitalen zellularen Mobilfunknetzen nutzbaren Mobilfunktelefonen gemäß dem GSM- oder UMTS-Funknetzstandard (GSM: Global System for Mobile Communications; UMTS: Universal Mobile Telecommunications System). Neben einer herkömmlichen Kommunikation durch Telefonieren ermöglichen derartige Verfahren und Endgeräte die Nutzung weiterer Funktionen und/oder Anwendungen, insbesondere von in Telekommunikationsnetzen bereitgestellten weiteren Diensten wie SMS (SMS: Short Messages Service), MMS (MMS: Multimedia Messages Service), E-Mail- und/oder Internetdiensten oder dergleichen Dienste. Zur weitergehenden Nutzung stehen dazu in der Regel endgeräteseitig verschiedene Funktionen und/oder Anwendungen mit entsprechenden Bedien- beziehungsweise Handhabungsmöglichkeiten zur Verfügung. Darüber hinaus stehen insbesondere bei Mobilfunktelefonen endgeräteseitig als weitergehende Nutzung Funktionen und/oder Anwendungen wie sogenannte Terminplaner, Wecker und dergleichen Erinnerungsfunktionalitäten bereitstellende Anwendungen zur Verfügung, in der Regel als seitens des Endgerätes ausführbares Anwendungsprogramm. Derartige Anwendungsprogramme weisen eine entsprechende Bedienbeziehungsweise Handhabbarkeit durch entsprechende Betätigungen, in der Regel durch Tasteneingaben und/oder Spracheingaben, auf.

Ein solches Endgerät ist aus dem US 2003/0157970 bekannt.

In Abhängigkeit der seitens der Endgeräte ausführbaren beziehungsweise nutzbaren Funktionen und/oder Anwendungen sind dabei endgeräteseitig ereignisgesteuerte Informationen und/oder inhaltsgesteuerte Informationen nutzbar beziehungsweise einer Nutzung zuführbar. Die Nutzung beinhaltet dabei in der Regel eine entsprechende optische und/oder akustische Wiedergabe seitens der Anzeigeeinrichtung. Ereignisgesteuerte Informationen im Sinne der vorliegenden Erfindung sind Informationen, die das Eintreten eines bestimmten Ereignisses seitens des Endgerätes als Funktionszustand und/oder Funktionszustandsänderung beinhalten. Dazu zählen insbesondere Ereignisse wie eingehende Kommunikationsinformationen, beispielsweise eingehende Nachrichten, wie Anrufe, Mitteilungen, insbesondere Mitteilungen eines Rundspruchdienstes eines Mobilfunknetzes, sogenanntes Cellbroadcasting, SMS, MMS, E-Mails, Voicemails oder dergleichen, sowie weitere in der Regel zeitlichen Bedingungen unterliegende Ereignisse, beispielsweise Erinnerungsfunktionalitäten hinsichtlich Terminen, Geburtstagen, nutzerseitig zu erledigenden Aufgaben und dergleichen. Inhaltsgesteuerte Informationen im Sinne der vorliegenden Erfindung sind Informationen, die in der Regel für den jeweiligen Nutzer des Endgerätes von besonderer Bedeutung sind, beispielsweise Informationen über beziehungsweise von Kommunikationspartnern des Nutzers, beispielsweise deren Name, deren Rufnummer im Telekommunikationsnetz oder dergleichen einer Adressierung entsprechender Nutzer dienender Informationen, beispielsweise deren E-Mail-Adresse. Ferner zählen zu inhaltsgesteuerten Informationen im Sinne der vorliegenden Erfindung insbesondere solche Informationen, die im allgemeinen zur reinen Information dienen, beispielsweise Bedienungsanleitungen und/oder Hilfestellungen seitens entsprechender Endgeräte und dergleichen in der Regel ereignisunabhängige Informationen.

Eine weitergehende Nutzung derartiger Informationen seitens der Endgeräte im Rahmen entsprechender Funktionen und/oder Anwendungen bedingt in der Regel eine entsprechende Bedienbarkeit beziehungsweise Handhabbarkeit der Endgeräte. Die Funktionen und/oder Anwendungen weisen dabei mitunter äußerst umfangreiche und insbesondere für ältere und/oder ungeübte Nutzer nicht beziehungsweise nur schwer verständliche Bedienmöglichkeiten bereitstellende Menüs mit entsprechenden Menüführungen auf. Dabei werden entsprechende Bedienmöglichkeiten einer weitergehenden Nutzung mitunter zwar seitens der Anzeigeeinrichtung wiedergegeben, bisher allerdings in einer insbesondere für ältere und/oder ungeübte Nutzer nicht beziehungsweise nur schwer verständlichen Art und Weise. In der Regel führt dies dazu, dass Nutzer von einer entsprechenden weitergehenden Nutzung ereignis- und/oder inhaltsgesteuerter Informationen und damit insbesondere von einer Nutzung von im Zusammenhang mit diesen nutzbaren Diensten des Telekommunikationsnetzes absehen.

Vor diesem Hintergrund liegt der vorliegenden Erfindung die **Aufgabe** zugrunde, ein Verfahren zum Betreiben eines in einem Telekommunikationsnetz, vorzugsweise einem Mobilfunknetz, nutzbaren Endgerätes der eingangs genannten Art als auch ein Endgerät zur Nutzung in einem Telekommunikationsnetz, vorzugsweise einem Mobilfunknetz der eingangs genannten Art derart zu verbessern, dass unter Meidung der beschriebenen Nachteile insbesondere für ältere und/oder ungeübte Nutzer eine einfache und leicht verständliche Bedien- beziehungsweise Handhabbarkeit hinsichtlich einer weitergehenden Nutzung ereignis- und/oder inhaltsgesteuerter Informationen ermöglicht wird.

Zur technischen Lösung dieser Aufgabe wird mit der vorliegenden Erfindung ein Verfahren nach Anspruch 1.

Der Erfindung liegt die Erkenntnis zugrunde, dass eine insbesondere für ältere und/oder ungeübte Nutzer einfache und verständliche Bedienbeziehungsweise Handhabbarkeit hinsichtlich einer weitergehenden Nutzung von ereignis- und/oder inhaltsgesteuerten Informationen erzielbar ist, wenn die durch die wenigstens eine Taste zur Verfügung stehende Bedienmöglichkeit für eine weitergehende Nutzung der ereignis- und/oder inhaltsgesteuerten Informationen dem Nutzer durch die Taste selbst signalisiert wird. Erfindungsgemäß können Nutzer so vorteilhafterweise an die entsprechende zur Verfügung stehende weitergehende Nutzung der ereignis- und/oder inhaltsgesteuerten Informationen erinnert und gewöhnt werden, so dass entsprechende weitergehende Nutzungen und insbesondere im Zusammenhang mit diesen stehende beziehungsweise durch diese erfolgende Nutzungen von Diensten des Telekommunikationsnetzes vorteilhafterweise häufiger und umfangreicher erfolgen, insbesondere auch von ungeübten und/oder älteren Nutzern. Vorteilhafterweise ist die wenigstens eine Taste der Eingabeeinrichtung ausschließlich zur erfindungsgemäßen Nutzung als Bedienmöglichkeit für wenigstens eine weitergehende Nutzung ereignisgesteuerter und/oder inhaltsgesteuerter Informationen funktionalisiert, so dass die Bedienung vereinfacht und insbesondere Fehlbedienungen verhinderbar beziehungsweise reduzierbar sind.

Zur weiteren Verbesserung der Bedien- beziehungsweise Handhabbarkeit hinsichtlich einer weitergehenden Nutzung von ereignis- und/oder inhaltsgesteuerten Informationen wird die Taste zur Wiedergabe endgeräteseitig zur Verfügung stehender Bedienmöglichkeiten vorteilhafterweise beleuchtet. In einer weiteren vorteilhaften Ausgestaltung der Erfindung ist die Intensität der Beleuchtung einstellbar und/oder vorgebbar, vorzugsweise nutzerindividuell, so dass insbesondere dem fortwährend gegebenen Bedarf einer endgeräteseitigen Individualisierung genüge getan wird. In einer weiteren vorteilhaften Ausgestaltung der Erfindung werden endgeräteseitig zur Verfügung stehende Bedienmöglichkeiten durch blinkende Beleuchtungen signalisiert. Vorteilhafterweise sind die Dauer und/oder die Frequenz des Blinkens einstellbar und/oder vorgebbar, zur weiteren Steigerung einer endgeräteseitigen Individualisierung vorzugsweise nutzerindividuell. Gemäß einer weiteren vorteilhaften Ausgestaltung der Erfindung werden endgeräteseitig zur Verfügung stehende Bedienmöglichkeiten durch farbige Beleuchtungen signalisiert. Vorteilhafterweise ist die Farbe einstellbar und/oder vorgebbar, vorzugsweise nutzerindividuell. Die Farbe und/oder das Blinken kann dem Nutzer so beispielsweise signalisieren, welcher Art und/oder welchen Typs zur Verfügung stehende Nutzungen ereignis- und/oder inhaltsgesteuerter Informationen beziehungsweise deren Bedienmöglichkeiten sind. Durch diese Maßnahmen, einzeln und/oder in Kombination miteinander ist die Bedienbeziehungsweise Handhabbarkeit zur weitergehenden Nutzung weiter verbesserbar und insbesondere für ältere und/oder ungeübte Nutzer besser verständlich, vorzugsweise derart, dass eine intuitive Nutzung ermöglicht wird. Die den Nutzern umfangreich zur Verfügung gestellten Individualisierungsmöglichkeiten steigern dabei vorteilhafterweise das Maß der intuitiven Nutzbarkeit.

Eine besonders vorteilhafte Ausgestaltung der Erfindung ist gekennzeichnet durch eine Wiedergabe endgeräteseitig zur Verfügung stehender Bedienmöglichkeiten seitens der Taste bei und/oder während eines Vorhandenseins von ungenutzten ereignis- und/oder inhaltsgesteuerten Informationen. So kann ein Nutzer unmittelbar anhand der Taste erkennen, ob und vorteilhafterweise welcher Art, Anzahl und/oder vorzugsweise Dringlichkeit für eine weitergehende Nutzung zur Verfügung stehende ereignis- und/oder inhaltsgesteuerte Informationen beziehungsweise deren Bedienmöglichkeiten sind.

Eine weitere vorteilhafte Ausgleich der Erfindung ist gekennzeichnet durch eine Gewichtung der endgeräteseitig zur Verfügung stehenden Bedienmöglichkeiten zur weitergehenden Nutzung der ereignis- und/oder inhaltsgesteuerten Informationen, welche vorzugsweise nutzerindividuell einstellbar ist. Erfindungsgemäß ist so den endgeräteseitig zur Verfügung stehenden Bedienmöglichkeiten zur weitergehenden Nutzung der ereignis- und/oder inhaltsgesteuerten Informationen quasi eine Filterlogik überlagert, welche vorteilhafterweise eine Auswahl und/oder Sortierung der Bedienmöglichkeiten der weitergehenden Nutzung der ereignis- und/oder inhaltsgesteuerten Informationen hinsichtlich deren Wichtigkeit und/oder Vorlieben für den Nutzer vornimmt. Vorteilhafterweise wird die Gewichtung anhand der Nutzungshäufigkeit und/oder Nutzungsdauer von Informationen bestimmt. Vorteilhafterweise erfolgt die Gewichtung nach Personen, Datum, Zeit, Ort und/oder Häufigkeit von Ereignis und/oder Inhalt. Im Rahmen der endgeräteseitig erfolgenden Nutzung sind diese dabei vorteilhafterweise nutzerindividuell auswählbar und/oder einstellbar.

In einer bevorzugten Ausgestaltung der Erfindung wird die Beleuchtung und/oder die Farbe der Taste verändert, vorzugsweise in Abhängigkeit von ereignisgesteuerten und/oder inhaltsgesteuerten Informationen und/oder der Gewichtung. So kann dem Nutzer vorteilhafterweise durch Beleuchtung und/oder Farbe der Taste signalisiert werden, ob und vorzugsweise welcher Art Informationen, Nutzungen und/oder Bedienungen endgeräteseitig vorliegen beziehungsweise erfolgen können.

In einer weiteren vorteilhaften Ausgestaltung der Erfindung wird die weitergehende Nutzung der Informationen ohne ein zusätzliches Menü und/oder eine zusätzliche Menüführung durch Betätigung der Taste ausgelöst und/oder bewirkt. Da so ansonsten mit der Nutzung von Menüs und/oder Menüführungen verbundene aufwändige und umfangreiche Betätigungseingaben entfallen können, ist die Bedienung beziehungsweise Handhabung insbesondere für ältere und/oder ungeübte Nutzer weiter vereinfachbar.

Vorteilhafterweise werden in Zusammenhang mit ereignis- und/oder inhaltsgesteuerten Informationen endgeräteseitig zur Verfügung stehende Bedienmöglichkeiten für eine weitergehende Nutzung der ereignis- und/oder inhaltsgesteuerten Informationen seitens der Anzeigeeinrichtung wiedergegeben, wobei die Wiedergabe der Informationen vorzugsweise optisch und/oder akustisch erfolgt.

In einer bevorzugten Ausgestaltung der Erfindung werden die Bedienmöglichkeiten für eine weitergehende Nutzung der ereignis- und/oder inhaltsgesteuerten Informationen seitens der Anzeigeeinrichtung in einer mit der wenigstens einen eine entsprechende weitergehende Nutzung der ereignis- und/oder inhaltsgesteuerten Informationen durch Betätigung ermöglichenden Taste korrespondierenden Form wiedergegeben. Dabei werden die Bedienmöglichkeiten zur weitergehenden Nutzung der ereignis- und/oder inhaltsgesteuerten Informationen seitens der Anzeigeeinrichtung vorteilhafterweise in einer mit der wenigstens einen eine entsprechende weitergehende Nutzung der ereignis- und/oder inhaltsgesteuerten Informationen durch Betätigung ermöglichenden Taste hinsichtlich der Farbe, der Form und/oder der Position der Taste seitens des Endgerätes und/oder der Eingabeeinrichtung des Endgerätes korrespondierenden Farbe, Form und/oder Position wiedergegeben. Eine weitere bevorzugte Ausgestaltung der Erfindung ist gekennzeichnet durch eine Anzeige der Zuordnung der wenigstens einen eine weitergehende Nutzung der ereignis- und/oder inhaltsgesteuerten Informationen durch Betätigung ermöglichenden Taste zu der weitergehenden Nutzung der ereignis- und/oder inhaltsgesteuerten Informationen durch Veränderung der Beleuchtung und/oder der Farbe der Taste. Durch diese erfindungsgemäßen Maßnahmen, einzeln und/oder in Kombination miteinander, ist die Bedienbarkeit beziehungsweise Handhabbarkeit weiter vereinfachbar und leichter verständlich gestaltbar, insbesondere für ältere und/oder ungeübte Nutzer im Hinblick auf eine intuitive Bedienung beziehungsweise Handhabung.

Eine besonders bevorzugte Ausgestaltung der Erfindung ist gekennzeichnet durch endgeräteseitig eingehende und/oder abgehende Kommunikationsinformationen, vorzugsweise Anrufe, SMS, MMS, E-Mails und/oder Internetdienste, Termine und/oder Erinnerungen als ereignisgesteuerte Informationen. Eine weitere bevorzugte Ausgestaltung der Erfindung ist gekennzeichnet durch Namen, Rufnummern und/oder sonstigen Adressinformationen, vorzugsweise E-Mail-Adressen und/oder Internetadressen, als inhaltsgesteuerte Informationen. In einer weiteren besonders vorteilhaften Ausgestaltung der Erfindung ist im Rahmen der Nutzung inhaltsgesteuerter Informationen das Vorhandensein einer bestimmten Zeichenfolge nutzbar. Die Zeichenfolge ist vorteilhafterweise nutzerindividuell einstellbar. Eine weitere Ausgestaltung der Erfindung sieht vor, dass als Zeichenfolge Schlüsselworte und/oder Telekommunikationsteilnehmern im Telekommunikationsnetz zugeordnete Rufnummern genutzt werden. Vorteilhafterweise erfolgt eine Auswertung der Zeichenfolge seitens des Endgerätes durch einen Vergleich einer vorgebbaren beziehungsweise vorgegebenen Zeichenfolge mit den in einer Information aufeinanderfolgenden Zeichen, wobei die Information vorteilhafterweise eine Nachricht eines in dem Telekommunikationsnetz nutzbaren Nachrichtendienstes ist, vorzugsweise eine SMS ist.

Gemäß einer weiteren vorteilhaften Ausgestaltung der Erfindung ist das erfindungsgemäße Verfahren als Anwendungsprogramm auf das Endgerät übertragbar und seitens des Endgerätes ausführbar. Bei entsprechender Ausgestaltung des Endgerätes lässt sich so die Funktionalität des erfindungsgemäßen Verfahrens seitens entsprechender Endgeräte vorteilhafterweise nachrüsten, beispielsweise durch Aufspielen des Anwendungsprogramms über das Telekommunikationsnetz oder dergleichen Verbindungen und/oder entsprechende mit dem Endgerät verbindbare Einrichtungen, beispielsweise einem sogenannten Personal Computer (PC) oder dergleichen Recheneinrichtung.

In einer weiteren vorteilhaften Ausgestaltung der Erfindung werden die ereignis- und/oder inhaltsgesteuerten Informationen seitens einer dazu vorgesehenen Speichereinrichtung des Endgerätes und/oder bei Ausgestaltung desselben als ein in einem Mobilfunknetz betreibbares beziehungsweise nutzbares Mobilfunktelefon seitens einer von diesem genutzten SIM-Karte (SIM: Subscriber Identification Module), welche in das Mobilfunktelefon einsetzbar ist und insbesondere zur Teilnehmeridentifikation und Authentifizierung für einen Zugang des Mobilfunktelefons zum Mobilfunknetz vom Mobilfunktelefon genutzt wird, gespeichert. Die SIM-Karte weist dabei unter anderem einen sogenannten SIM-Chip mit verschiedenen elektronischen Baugruppen, insbesondere ein ROM (Read Only Memory), EEPROM (Electrically Erasable and Programmable ROM), RAM (Random Access Memory), eine CPU (Central Processing Unit), eine I/O-Schnittstelle und entsprechende Kontakte zur Kontaktierung in dem Mobilfunktelefon auf.

Vorteilhafterweise werden die seitens der Speichereinrichtung des Mobilfunktelefons gespeicherten ereignis- und/oder inhaltsgesteuerten Informationen auch entsprechend seitens der SIM-Karte gespeichert, vorzugsweise automatisch. Eine entsprechende als sogenanntes "Spiegeln" bezeichnete Speicherung hat den Vorteil, dass der Nutzer des Endgerätes nicht hinsichtlich des Speicherortes, also der Speichereinrichtung des Mobilfunktelefons einerseits und/oder SIM-Karte andererseits, verwirrt und/oder mit dieser Frage belastet wird. Dadurch ist die Bedienung vorteilhafterweise weiter vereinfacht. Darüber hinaus sind die entsprechend gespeicherten ereignis- und/oder inhaltsgesteuerten Informationen so automatisch gesichert, sogenanntes Backup.

Eine weitere vorteilhafte Ausgestaltung der Erfindung sieht eine endgeräteseitig erfolgende Anpassung und/oder Konvertierung der Formate von seitens SIM-Karten unterschiedlicher Mobilfunknetzbetreiber gespeicherten ereignis- und/oder inhaltsgesteuerten Informationen vor, da diese Formate von Mobilfunknetzbetreiber zu Mobilfunknetzbetreiber unterschiedlich ausgestaltet sein können. Dadurch ist vorteilhafterweise eine vereinfachte Nutzung von ereignis- und/oder inhaltsgesteuerten Informationen bei einem nutzerseitigen Wechsel des Mobilfunknetzbetreibers ermöglicht. Eine besonders bevorzugte Ausgestaltung der Erfindung sieht ein Format vor, bei dem zu einer inhaltsgesteuerten Information wenigstens drei ereignis- und/oder inhaltsgesteuerten Informationen zugeordnet sind und als eine inhaltsgesteuerte Information nutzbar sind, sogenanntes Tagging.

Eine weitere Ausgestaltung der Erfindung sieht vor, dass zumindest die seitens einer SIM-Karte gespeicherten ereignis- und/oder inhaltsgesteuerten Informationen mittels einer mit dem Endgerät verbindbaren Recheneinrichtung in Form eines sogenannten Personal-Computers (PC) und einer seitens diesen ausführbaren Anwendung in Form eines Programms (Software) editierbar sind, insbesondere für eine Sicherung, Pflege und/oder Aktualisierung umfassende Wartung der ereignis- und/oder inhaltsgesteuerten Informationen.

Zur technischen **Lösung** der eingangs genannten Aufgabe wird mit der vorliegenden Erfindung ferner ein Endgerät nach Anspruch 17. Vorteilhafterweise ist die wenigstens eine Taste der Eingabeeinrichtung ausschließlich zur erfindungsgemäßen Nutzung als Bedienmöglichkeit für wenigstens eine weitergehende Nutzung ereignisgesteuerter und/oder inhaltsgesteuerter Informationen funktionalisiert. Dadurch ist die Bedienung vereinfacht und sind insbesondere Fehlbedienungen verhinderbar beziehungsweise zumindest weitestgehend vermeidbar.

In einer weiteren Ausgestaltung der Erfindung ist die Taste des erfindungsgemäßen Endgerätes zur Wiedergabe endgeräteseitig zur Verfügung stehender Bedienmöglichkeiten beleuchtbar. Vorteilhafterweise ist die Intensität der Beleuchtung einstellbar und/oder vorgebbar, vorzugsweise nutzerindividuell. In einer weiteren vorteilhaften Ausgestaltung des erfindungsgemäßen Endgerätes sind endgeräteseitig zur Verfügung stehende Bedienmöglichkeiten durch blinkende Beleuchtungen seitens der Taste signalisierbar. Dabei sind die Dauer und/oder die Frequenz des Blinkens vorteilhafterweise einstellbar und/oder vorgebbar, vorzugsweise nutzerindividuell. Gemäß einem weiteren Vorschlag der Erfindung sind endgeräteseitig zur Verfügung stehende Bedienmöglichkeiten durch farbige Beleuchtungen signalisierbar. Dabei ist die Farbe vorteilhafterweise einstellbar und/oder vorgebbar, vorzugsweise nutzerindividuell. Durch diese erfindungsgemäßen Ausgestaltungen des Endgerätes, einzeln und/oder in kombinativer Anwendung, ist die Bedienung beziehungsweise Handhabung des Endgerätes hinsichtlich in Zusammenhang mit den ereignis- und/oder inhaltsgesteuerten Informationen endgeräteseitig zur Verfügung stehender weitergehender Nutzungen und/oder deren Bedienmöglichkeiten weiter verbesserbar und verständlicher gestaltbar, insbesondere für ältere und/oder ungeübte Nutzer. Darüber hinaus sind so umfangreiche Möglichkeiten zur Nutzerindividualisierung des Endgerätes gegeben, insbesondere hinsichtlich der Bedienung für weitergehende Nutzungen von ereignis- und/oder inhaltsgesteuerten Informationen.

In einer besonders bevorzugten Ausgestaltung der Erfindung ist das erfindungsgemäße Endgerät zur Anzeige der Zuordnung der wenigstens einen eine weitergehende Nutzung der ereignis- und/oder inhaltsgesteuerten Informationen durch Betätigung ermöglichenden Taste zu der weitergehenden Nutzung der ereignis- und/oder inhaltsgesteuerten Informationen durch Veränderung der Beleuchtung und/oder der Farbe der Taste ausgebildet. So ist dem Nutzer eines erfindungsgemäßen Endgerätes beispielsweise durch Veränderung der Beleuchtung und/oder der Farbe der Taste der Eingabeeinrichtung vorteilhafterweise sowohl die Bedienmöglichkeit zur weitergehenden Nutzung von Informationen als auch die zu betätigende Taste für eine entsprechende Nutzung signalisierbar. Dadurch ist die Bedienung beziehungsweise Handhabung insbesondere für ungeübte und/oder ältere Nutzer weiter vereinfachbar. In einer besonders bevorzugten Ausgestaltung der Erfindung ist die entsprechende Taste der Eingabeeinrichtung farbig beleuchtbar und sind entsprechende Bedienmöglichkeiten zur erfindungsgemäßen Nutzung ereignisgesteuerter Informationen und inhaltsgesteuerter Informationen durch verschiedene Leuchtfarben und/oder Blinklichtkombinationen dem Nutzer signalisierbar.

Eine weitere besonders vorteilhafte Ausgestaltung des erfindungsgemäßen Endgerätes ist gekennzeichnet durch eine Wiedergabe endgeräteseitig zur Verfügung stehender Bedienmöglichkeiten seitens der Taste bei und/oder während eines Vorhandenseins von ungenutzten ereignis- und/oder inhaltsgesteuerten Informationen. Der Nutzer eines erfindungsgemäßen Endgerätes kann so vorteilhafterweise direkt und unmittelbar anhand der Taste erkennen, ob und vorteilhafterweise welcher Art, Anzahl und/oder vorzugsweise Dringlichkeit für eine weitergehende Nutzung zur Verfügung stehende ereignis- und/oder inhaltsgesteuerte Informationen sind und wie er diese bedient beziehungsweise welche Bedienmöglichkeiten er hierzu hat.

Eine weitere vorteilhafte Ausgestaltung der Erfindung ist gekennzeichnet durch eine Gewichtung der endgeräteseitig zur Verfügung stehenden Bedienmöglichkeiten zur weitergehenden Nutzung der ereignis- und/oder inhaltsgesteuerten Informationen, wobei die Gewichtung vorzugsweise nutzerindividuell seitens des Endgerätes einstellbar ist. Dadurch ist die Bedienbeziehungsweise Handhabbarkeit des erfindungsgemäßen Endgerätes hinsichtlich einer weitergehenden Nutzung der ereignis- und/oder inhaltsgesteuerten Informationen weiter verbesserbar und steigerbar und ferner an die Bedürfnisse und/oder Vorlieben des Nutzers des Endgerätes anpassbar. Vorteilhafterweise erfolgt die Gewichtung nach Personen, Datum, Zeit, Ort und/oder Häufigkeit von Ereignis und/oder Inhalt.

Gemäß einer besonders bevorzugten Ausgestaltung der Erfindung ist die Beleuchtung und/oder Farbe der Taste veränderbar, vorzugsweise in Abhängigkeit von ereignisgesteuerten und/oder inhaltsgesteuerten Informationen und/oder der Gewichtung.

Eine weitere vorteilhafte Ausgestaltung der Erfindung sieht vor, dass die weitergehende Nutzung der Informationen ohne ein zusätzliches Menü und/oder eine zusätzliche Menüführung durch Betätigung der Taste auslösbar und/oder bewirkbar ist. Dadurch ist die Bedienung beziehungsweise Handhabung des erfindungsgemäßen Endgerätes weiter vereinfachbar und verständlicher gestaltbar.

Das erfindungsgemäße Endgerät ist vorteilhafterweise derart ausgestaltet und/oder betreibbar, dass in Zusammenhang mit ereignis- und/oder inhaltsgesteuerten Informationen endgeräteseitig zur Verfügung stehende Bedienmöglichkeiten für eine weitergehende Nutzung der ereignis- und/oder inhaltsgesteuerten Informationen seitens der Anzeigeeinrichtung wiedergebbar sind, wobei die Wiedergabe der Informationen vorzugsweise optisch und/oder akustisch erfolgt. In einer besonders bevorzugten Ausgestaltung des erfindungsgemäßen Endgerätes sind die Bedienmöglichkeiten für eine weitergehende Nutzung der ereignis- und/oder inhaltsgesteuerten Informationen seitens der Anzeigeeinrichtung in einer mit der wenigstens einen eine entsprechende weitergehende Nutzung der ereignis- und/oder inhaltsgesteuerten Informationen durch Betätigung ermöglichenden Taste korrespondierenden Form wiedergebbar. Vorteilhafterweise sind die Bedienmöglichkeiten zur weitergehenden Nutzung der ereignis- und/oder inhaltsgesteuerten Informationen dabei seitens der Anzeigeeinrichtung in einer mit der wenigstens einen eine entsprechende weitergehende Nutzung der ereignis- und/oder inhaltsgesteuerten Informationen durch Betätigung ermöglichenden Taste hinsichtlich der Farbe, der Form und/oder der Position der Taste seitens des Endgerätes und/oder der Eingabeeinrichtung des Endgerätes korrespondierenden Farbe, Form und/oder Position wiedergebbar. Dadurch werden die Möglichkeiten einer intuitiven Bedienung und/oder Handhabung des erfindungsgemäßen Endgerätes durch den Nutzer weiter gesteigert.

Zur weiteren Verbesserung der Bedienung beziehungsweise Handhabung des erfindungsgemäßen Endgerätes ist die wenigstens eine Taste der Eingabeeinrichtung hinsichtlich ihrer Abmessungen größer ausgebildet als die einzelnen weiteren zur Erfassung von Informationen durch Betätigung nutzbaren Tasten der Eingabeeinrichtung des Endgerätes. In einer konkreten Ausgestaltung der Erfindung ist die wenigstens eine Taste der Eingabeeinrichtung hinsichtlich ihrer Abmessungen in etwa viermal so groß ausgebildet wie die einzelnen zur Erfassung von Informationen durch Betätigung nutzbaren Tasten der Eingabeeinrichtung. Eine besonders bevorzugte Ausgestaltung der Erfindung sieht vor, dass die wenigstens eine Taste der Eingabeeinrichtung von einer zumindest teilweise berührungssensitiven Anzeigeeinrichtung, einem sogenannten Touchscreen, ausgebildet ist, welche vorzugsweise zumindest teilweise Bestandteil der Anzeigeeinrichtung zur optischen Wiedergabe von Informationen ist.

Zur weiteren Vereinfachung der Bedienung beziehungsweise Handhabung ist die wenigstens eine weitergehende Nutzung ermöglichende Taste der Eingabeeinrichtung von weiteren zur Erfassung von Informationen durch Betätigung nutzbaren Tasten der Eingabeeinrichtung derart beabstandet und/oder an anderen Gehäuseseiten des Endgerätes angeordnet, dass sich zwischen der die Nutzung durch Betätigung ermöglichenden Taste der Eingabeeinrichtung und der weiteren zur Erfassung von Informationen durch Betätigung nutzbaren Tasten der Eingabeeinrichtung die Anzeigeeinrichtung zur optischen Wiedergabe von Informationen befindet.

Eine bevorzugte Ausgestaltung der Erfindung ist gekennzeichnet durch endgeräteseitig eingehende und/oder abgehende Kommunikationsinformationen, vorzugsweise Anrufe, SMS, MMS, E-Mails und/oder Internetdienste, Termine und/oder Erinnerungen als ereignisgesteuerte Informationen. Eine weitere bevorzugte Ausgestaltung der Erfindung ist gekennzeichnet durch Namen, Rufnummer und/oder sonstige Adressinformationen, vorzugsweise E-Mail-Adressen und/oder Internetadressen, von Kommunikationspartnern des Nutzers des erfindungsgemäßen Endgerätes als inhaltsgesteuerte Informationen.

In einer bevorzugten Ausgestaltung ist das Endgerät ein in Mobilfunknetzen betreibbares mobiles Endgerät, vorzugsweise ein Mobilfunktelefon.

Vorteilhafterweise ist das erfindungsgemäße Endgerät zur Ausführung des erfindungsgemäßen Verfahrens ausgebildet.

Weitere Einzelheiten, Merkmale und Vorteile der Erfindung werden nachfolgend anhand des in den Figuren der Zeichnung dargestellten Ausführungsbeispiels näher erläutert. Dabei zeigen:
- Fig. 1: in einer Draufsicht ein Ausführungsbeispiel eines erfindungsgemäßen Endgerätes zur Ausführung eines erfindungsgemäßen Verfahrens in einem ersten Funktionszustand und
- Fig. 2: in einer Draufsicht das erfindungsgemäße Endgerät zur Ausführung eines erfindungsgemäßen Verfahrens gemäß Fig. 1 in einem zweiten Funktionszustand.

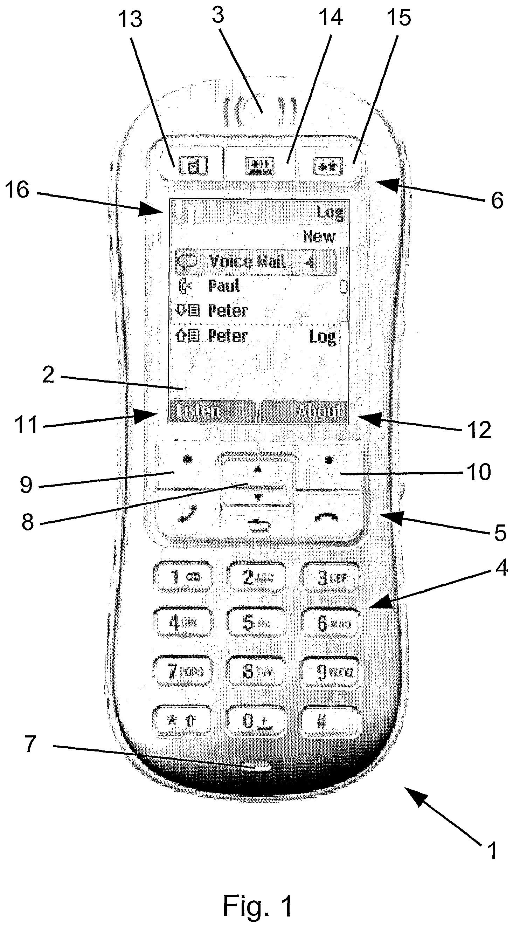

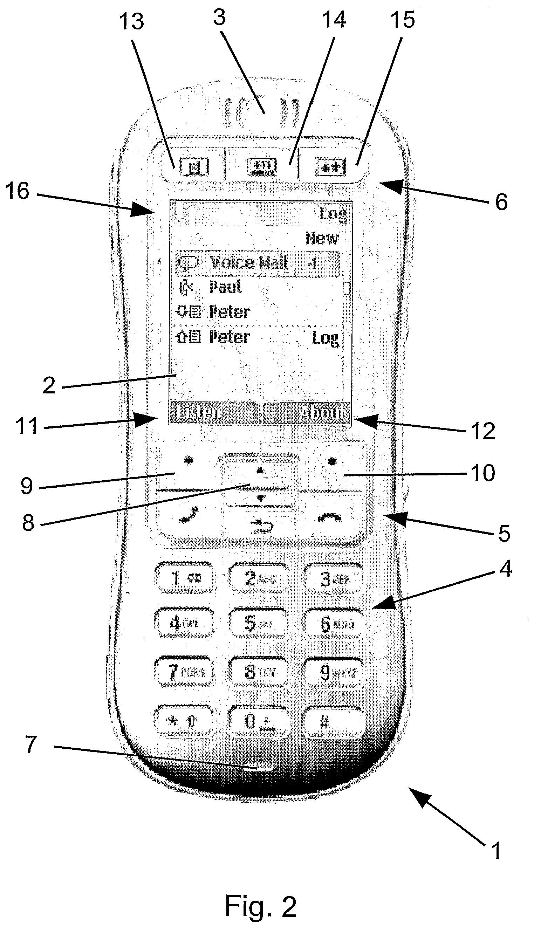

Fig. 1 und Fig. 2 zeigen ein in einem Mobilfunknetz betreibbares Mobilfunktelefon 1. Das Mobilfunktelefon 1 weist ein Display 2 als Anzeigeeinrichtung zur optischen Wiedergabe von Informationen und einen Lautsprecher 3 als Anzeigeeinrichtung zur akustischen Wiedergabe von Informationen auf. Weiter weist das Mobilfunktelefon 1 Tastaturen 4, 5 und 6 sowie ein Mikrofon 7 als Eingabeeinrichtungen zur Erfassung von Informationen auf, zu denen insbesondere auch Bedieneingaben gehören.

Die als Tastaturen ausgebildeten Eingabeeinrichtungen 4, 5 und 6 des Mobilfunktelefons 1 weisen jeweils mehrere betätigbare Tasten auf.

Die zwölf Tasten der Eingabeeinrichtung 4 dienen zur Erfassung von Informationen durch Eingabe von einzelnen Zeichen, beispielsweise Ziffern und/oder Buchstaben, durch entsprechende Tastenbetätigung.

Die sechs Tasten der Eingabeeinrichtung 5 dienen zur Steuerung von und/oder durch Funktionalitäten des Mobilfunktelefons 1, beispielsweise zur Gesprächsannahme, Gesprächsbeendigung, Menüauswahl oder dergleichen Funktionalitäten beziehungsweise Funktionen des Mobilfunktelefons 1. Die mittlere Taste 8 der als Eingabeeinrichtung dienenden Tastatur 5 ist dabei vorliegend als zwischen zwei Positionen kippbare Taste ausgebildet und erlaubt in entsprechenden Anwendungen und/oder Funktionen des Mobilfunktelefons 1 ein sogenanntes Blättern beziehungsweise Scrollen, insbesondere für eine weitergehende Menü- und/oder Funktionsauswahl in beziehungsweise durch seitens des Mobilfunktelefons 1 implementierten Anwendungen, beispielsweise in Form von seitens des Mobilfunktelefons 1 ausführbaren Anwendungsprogrammen. Die Tasten 9 und 10 der Eingabeeinrichtung 5 ermöglichen bei entsprechender Betätigung eine weitergehende Menü- und/oder Funktionsauswahl, welche in entsprechenden Anwendungen und/oder bei Vorhandensein entsprechender Funktionalitäten beziehungsweise Funktionen seitens des Displays 2 in den mit dem Bezugszeichen 11 und 12 versehenen Pfeilen gekennzeichneten Bereichen dem Nutzer zur entsprechenden Auswahl signalisiert werden.

Die drei nebeneinander angeordneten Tasten 13, 14 und 15 der als Eingabeeinrichtung dienenden Tastatur 6 sind vorliegend für weitergehende Nutzungen von ereignis- und/oder inhaltsgesteuerten Informationen vorgesehen, die durch Betätigung der Tasten 13, 14 und/oder 15 ausgelöst und/oder bewirkt und seitens der Anzeigeeinrichtung 2 und/oder 3 wiedergegeben werden.

Die Tasten 13, 14 und 15 der Eingabeeinrichtung 6 sind vorliegend in einem Bereich oberhalb des Displays 2 und unterhalb des Lautsprechers 3 angeordnet. Die als Eingabeeinrichtungen dienenden Tastaturen 4 und 5 sind vorliegend in einem Bereich unterhalb des Displays 2 angeordnet, wobei die Tasten der Tastatur 5 vorliegend unmittelbar unterhalb des Displays 2, also an diese angrenzend, angeordnet sind.

Die drei Tasten 13, 14 und 15 der Eingabeeinrichtung 6 sind vorliegend in der Lage, ihre Farbe zu ändern, wozu die Tasten 13, 14 und 15 der Eingabeeinrichtung 6, vorliegend eine mehrfarbige Hintergrundbeleuchtung aufweisen und entsprechend transparent ausgebildet sind. Die Tasten 13, 14 und 15 der Eingabeeinrichtung 6 des Mobilfunktelefons 1 können so insbesondere zur optischen Wiedergabe von Bedienmöglichkeiten von seitens des Mobilfunktelefons 1 zur Verfügung stehenden weitergehenden Nutzungen von ereignis- und/oder inhaltsgesteuerten Informationen beziehungsweise diese repräsentierenden Signalen genutzt werden.

Um eine insbesondere für ältere und/oder ungeübte Nutzer einfachere und weniger umständliche Bedien- bzw. Handhabbarkeit hinsichtlich einer weitergehenden Nutzung von ereignis- und/oder inhaltsgesteuerten Informationen zu ermöglichen werden die Bedienmöglichkeiten zur weitergehenden Nutzung der Kommunikationsinformationen seitens des Mobilfunktelefons 1 gewichtet vorgegeben. Im Rahmen der gewichteten Vorgabe der Bedienmöglichkeiten zur weitergehenden Nutzung der Kommunikationsinformationen werden den endgeräteseitig zur Verfügung stehenden Nutzungen entsprechende Bedienmöglichkeiten durch Betätigung derselben ermöglichende Tasten 13, 14 bzw. 15 der Eingabeeinrichtung 6 zugeordnet. In Abhängigkeit von der Gewichtung wird dann in den jeweiligen Funktionszuständen seitens des Displays 2 die Zuordnung der die entsprechende weitergehende Nutzung der jeweiligen Informationen durch Betätigung ermöglichenden Taste 13, 14, und/oder 15 der Eingabeeinrichtung 6 wiedergegeben.

Eine entsprechende Zuordnung der Wiedergabe der Bedienmöglichkeit wird darüber hinaus in optischer Form seitens des Displays 2 angezeigt, vorliegend durch ein entsprechendes Logo, Text oder dergleichen optischer Informationen. Für den Nutzer des Mobilfunktelefons 1 ist so eine gesteigerte Synergie in der Bedien- beziehungsweise Handhabbarkeit des Mobilfunktelefons 1 erzielbar, die eine Vereinfachung sowohl in der Wahrnehmung von ereignis- und/oder inhaltsgesteuerten Informationen, der weitergehenden Nutzung als auch der Bedienmöglichkeiten derselben ermöglicht, insbesondere für ungeübte und/oder ältere Nutzer des Mobilfunktelefons 1.

In Fig. 1 und Fig. 2 erfolgt eine solche Zuordnung durch das auf der Taste 15 der Eingabeeinrichtung 6 verwendete Doppelpfeilsymbol und der korrespondierend als Taste mit Doppelpfeilsymbol seitens des Displays 2 erfolgenden Darstellung in der linken oberen Ecke des Displays 2 die in Fig. 1 und Fig. 2 mit dem mit dem Bezugszeichen 16 versehenen Pfeil gekennzeichnet ist. Sowohl die Taste 15 der Eingabeeinrichtung 6 als auch die Wiedergabe derselben als Logo 16 seitens des Displays 2 erfolgen dabei ferner in einer einander entsprechenden oder miteinander korrespondierenden Farbe. Der Nutzer des Mobilfunktelefons 1 weiß so beispielsweise durch einfache Symbol- und/oder Farbzuordnung aufgrund der verfahrensgemäß erfolgenden Wiedergabe der Bedienmöglichkeiten zur weitergehenden Nutzung der ereignis- und/oder inhaltsgesteuerten Informationen seitens des Mobilfunktelefons 1, welche Taste 13, 14 und/oder 15 er zur weitergehenden Nutzung der jeweiligen Informationen für eine weitergehende Nutzung derselben zu betätigen hat. Vorliegend ist die Taste 15 der Eingabeeinrichtung 6 dabei zusätzlich entsprechend blinkend beleuchtet, wie anhand eines Vergleichs der Farbe der Taste 15 in Fig. 1 und Fig. 2 zu erkennen ist. In Fig. 1 zeigt die Taste 15 in einem unbeleuchteten und Fig. 2 in einem beleuchteten Zustand, erkennbar an der grau unterlegten Darstellung der Taste 15 in Fig. 1 und der weiß unterlegten Darstellung der Taste 15 in Fig. 2.

Bei dem in den Fig. 1 und Fig. 2 dargestellten Ausführungsbeispiel sind vorliegend seitens des Displays 2 Kommunikationsinformationen als ereignisgesteuerte Informationen mit einer Gewichtung wiedergegeben. Das Vorhandensein von entsprechenden Kommunikationsinformationen für den Nutzer und eine entsprechende Bedienmöglichkeit zur weitergehenden Nutzung derselben wird dem Nutzer dabei - wie oben bereits erläutert - vereinfachend durch die in Fig. 1 und Fig. 2 mit dem Pfeil 16 versehene Darstellung der Taste 15 der Eingabeeinrichtung 6 und die entsprechend zu betätigende und blinkende Taste 15 der Eingabeeinrichtung 6 angezeigt.

Im Rahmen der gewichteten Wiedergabe von Kommunikationsinformationen sind bei dem in den Fig. 1 und Fig. 2 dargestellten Ausführungsbeispiel seitens des Mobilfunktelefons 1 für den Nutzer des Endgerätes 1 vier sogenannte "Voice Mails", ein verpasster Anruf von einem "Paul" genannten Kommunikationspartner des Nutzers des Mobilfunktelefons 1, sowie eine von dem "Peter" genannten Kommunikationspartner des Nutzers des Mobilfunktelefons 1 empfangene als auch eine an diesen gesendete SMS vorhanden. Vorliegend sind die vier "Voice Mails" von dem Nutzer des Mobilfunktelefons 1 noch nicht als weitergehende Nutzung derselben abgehört worden. Dementsprechend blinkt vorliegend - wie bereits erläutert - die Taste 15 der Eingabeeinrichtung 6 des Mobilfunktelefons 1 zur Signalisierung dieses Funktionszustandes des Mobilfunktelefons 1 und zur Wiedergabe der entsprechenden Bedienmöglichkeit zur Nutzung.

Über die mit 11 beziehungsweise 12 gekennzeichneten Bereiche in dem Display 2 können entsprechende weitergehende Nutzungen und/oder Bedienungen der Rufnummern durch Betätigung der Tasten 9 beziehungsweise 10 erfolgen. Bei Betätigung der Taste 9 erfolgt dabei vorliegend eine Wiedergabe der für den Nutzer seitens des Mobilfunktelefons 1 vorliegenden "Voice Mails", entsprechend der Anzeige beziehungsweise Wiedergabe in dem mit 11 gekennzeichneten Bereich "Listen" seitens des Displays 2.

Durch Betätigung der Taste 10 ist vorliegend entsprechend dem Hinweis in dem mit 12 gekennzeichneten Bereich des Displays 2 gemäß Fig. 1 und Fig. 2 eine Hilfefunktionalität zu der in Fig.1 und Fig. 2 wiedergegebenen Anzeige beziehungsweise Funktionalität - vorliegend zu den "Voice Mails" - aufrufbar, wie anhand des in dem Bereich 12 wiedergegebenen Textes "About" erkennbar.

Die weiteren seitens des Displays 2 des Mobilfunktelefons 1 wiedergegebenen Kommunikationsinformationen gemäß Fig. 1 und Fig. 2, vorliegend der verpasste Anruf von dem "Paul" genannten Kommunikationspartner des Nutzers des Mobilfunktelefons 1, sowie die von dem "Peter" genannten Kommunikationspartner des Nutzers des Mobilfunktelefons 1 empfangene als auch die an diesen gesendete SMS sind dabei über die kippbare Taste 8 durch Blättern beziehungsweise Scrollen zur weitergehenden Nutzung auswählbar und durch entsprechende Tastenbetätigung als Bedieneingabe seitens der Eingabeeinrichtung 5 und/oder 6 entsprechend einer weitergehenden Nutzung zuführbar. Dabei wird der im Display 2 den Eintrag "Voice Mail" hervorhebende Balken, vorliegend durch graue Unterlegung des Zeichens "Voice Mail" dargestellt, durch entsprechende Auf- beziehungsweise Abbewegung der Taste 8 durch die Einträge verpasste Anruf von dem "Paul", empfangene SMS von "Peter" und gesendete SMS an "Peter" durchgescrollt beziehungsweise durchgeblättert und zur weitergehenden Nutzung mit entsprechenden Bedienmöglichkeiten seitens der Eingabeeinrichtungen 4, 5 und/oder 6 wiedergegeben.

Die in den Figuren der Zeichnung dargestellten Ausführungsbeispiele der Erfindung dienen lediglich der Erläuterung der Erfindung und sind für diese nicht beschränkend.

### Bezugszeichenliste

- 1: Endgerät/Mobilfunktelefon
- 2: Anzeigeeinrichtung/Display
- 3: Anzeigeeinrichtung/Lautsprecher
- 4: Eingabeeinrichtung/Tastatur
- 5: Eingabeeinrichtung/Tastatur
- 6: Eingabeeinrichtung/Tastatur
- 7: Eingabeeinrichtung(Mikrofon
- 8: Taste (Eingabeeinrichtung (5))
- 9: Taste (Eingabeeinrichtung (5))
- 10: Taste (Eingabeeinrichtung (5))
- 11: Bereich (Anzeigeeinrichtung (2))
- 12: Bereich (Anzeigeeinrichtung (2))
- 13: Taste (Eingabeeinrichtung (6))
- 14: Taste (Eingabeeinrichtung (6))
- 15: Taste (Eingabeeinrichtung (6))
- 16: Bereich (Anzeigeeinrichtung (2))

## Patentansprüche

1. Verfahren zum Betreiben eines in einem Mobilfunknetz, nutzbaren Endgerätes (1), welches eine Anzeigeeinrichtung (2, 3) zur optischen oder akustischen Wiedergabe von Informationen und wenigstens eine Eingabeeinrichtung (4, 5, 6) zur Erfassung von Informationen aufweist, wobei ereignis- oder inhaltsgesteuerte Informationen seitens der Anzeigeeinrichtung wiedergegeben werden und wobei die Eingabeeinrichtung (6) wenigstens eine Taste aufweist, durch deren Betätigung wenigstens eine weitergehende Nutzung der ereignis- oder inhaltsgesteuerten Informationen ermöglicht wird, wobei seitens der Taste (13, 14, 15) wenigstens eine in Zusammenhang mit den ereignis- oder inhaltsgesteuerten Informationen endgeräteseitig zur Verfügung stehende Bedienmöglichkeit für eine weitergehende Nutzung der ereignis- oder inhaltsgesteuerten Informationen wiedergegeben wird, **dadurch gekennzeichnet, dass** die Taste zur Wiedergabe endgeräteseitig zur Verfügung stehender Bedienmöglichkeiten beleuchtet wird, die Intensität der Beleuchtung oder die Dauer oder die Frequenz eines zur Signalisierung endgeräteseitig zur Verfügung stehender Bedienmöglichkeiten erfolgenden Blinkens der Beleuchtung nutzerindividuell einstellbar oder vorgebbar sind, eine Gewichtung der endgeräteseitig zur Verfügung stehenden Bedienmöglichkeiten zur weitergehenden Nutzung der ereignis- oder inhaltsgesteuerten Informationen einstellbar ist, und die weitergehende Nutzung der Informationen ohne ein zusätzliches Menü oder eine zusätzliche Menüführung durch Betätigung der Taste (13, 14, 15) ausgelöst oder bewirkt wird.

2. Verfahren nach Anspruch 1, **dadurch gekennzeichnet, dass** endgeräteseitig zur Verfügung stehende Bedienmöglichkeiten durch farbige Beleuchtungen signalisiert werden.

3. Verfahren nach Anspruch 2, **dadurch gekennzeichnet, dass** die Farbe einstellbar oder vorgebbar ist.

4. Verfahren nach Anspruch 3, **dadurch gekennzeichnet, dass** die Farbe nutzerindividuell einstellbar oder vorgebbar ist.

5. Verfahren nach einem der Ansprüche 1 bis 4, **gekennzeichnet durch** eine Wiedergabe endgeräteseitig zur Verfügung stehender Bedienmöglichkeiten seitens der Taste (13, 14, 15) bei oder während eines Vorhandenseins von ungenutzten ereignis- oder inhaltsgesteuerten Informationen.

6. Verfahren nach einem der Ansprüche 1 bis 5, **dadurch gekennzeichnet, dass** die Gewichtung nutzerindividuell einstellbar ist.

7. Verfahren nach einem der Ansprüche 1 bis 6, **dadurch gekennzeichnet, dass** die Gewichtung nach Personen, Datum, Zeit, Ort oder Häufigkeit von Ereignis oder Inhalt erfolgt.

8. Verfahren nach einem der Ansprüche 1 bis 7, **dadurch gekennzeichnet, dass** die Beleuchtung oder Farbe der Taste (13, 14, 15) in Abhängigkeit von ereignisgesteuerten oder inhaltsgesteuerten Informationen oder der Gewichtung verändert wird.

9. Verfahren nach einem der Ansprüche 1 bis 8, **dadurch gekennzeichnet, dass** in Zusammenhang mit ereignis- oder inhaltsgesteuerten Informationen endgeräteseitig zur Verfügung stehende Bedienmöglichkeiten für eine weitergehende Nutzung der ereignis- oder inhaltsgesteuerten Informationen seitens der Anzeigeeinrichtung (2, 3) wiedergegeben werden.

10. Verfahren nach Anspruch 9, **dadurch gekennzeichnet, dass** die Wiedergabe der Informationen optisch oder akustisch erfolgt.

11. Verfahren nach Anspruch 9 oder Anspruch 10, **dadurch gekennzeichnet, dass** die Bedienmöglichkeiten für eine weitergehende Nutzung der ereignis- oder inhaltsgesteuerten Informationen seitens der Anzeigeeinrichtung (2) in einer mit der wenigstens einen eine entsprechende weitergehende Nutzung der ereignis- oder inhaltsgesteuerten Informationen durch Betätigung ermöglichenden Taste (13, 14, 15) korrespondierenden Form wiedergegeben werden.

12. Verfahren nach Anspruch 11, **dadurch gekennzeichnet, dass** die Bedienmöglichkeiten zur weitergehenden Nutzung der ereignis- oder inhaltsgesteuerten Informationen seitens der Anzeigeeinrichtung (2) in einer mit der wenigstens einen eine entsprechende weitergehende Nutzung der ereignis- oder inhaltsgesteuerten Informationen durch Betätigung ermöglichenden Taste (13, 14, 15) hinsichtlich der Farbe, der Form oder der Position der Taste (13, 14, 15) seitens des Endgerätes (1) oder der Eingabeeinrichtung (6) des Endgerätes (1) korrespondierenden Farbe, Form oder Position wiedergegeben werden.

13. Verfahren nach einem der Ansprüche 1 bis 12, **gekennzeichnet durch** eine Anzeige der Zuordnung der wenigstens einen eine weitergehende Nutzung der ereignis- oder inhaltsgesteuerten Informationen **durch** Betätigung ermöglichenden Taste (13, 14, 15) zu der weitergehenden Nutzung der ereignis- oder inhaltsgesteuerten Informationen **durch** Veränderung der Beleuchtung oder der Farbe der Taste (13, 14, 15).

14. Verfahren nach einem der Ansprüche 1 bis 13, **gekennzeichnet durch** endgeräteseitig eingehende oder abgehende Kommunikationsinformationen, vorzugsweise Anrufe, SMS, MMS, E-Mails oder Internetdienste, Termine oder Erinnerungen als ereignisgesteuerte Informationen.

15. Verfahren nach einem der Ansprüche 1 bis 14, **gekennzeichnet durch** Namen, Rufnummern oder 2. sonstige Adressinformationen als inhaltsgesteuerte Informationen.

16. Verfahren nach einem der Ansprüche 1 bis 15, **dadurch gekennzeichnet, dass** dieses als Anwendungsprogramm auf das Endgerät (1) übertragbar und seitens des Endgerätes (1) ausführbar ist.

17. Endgerät (1) zur Nutzung in einem Mobilfunknetz, mit einer Anzeigeeinrichtung (2, 3) zur optischen oder akustischen Wiedergabe von Informationen und wenigstens eine Eingabeeinrichtung (4, 5, 6) zur Erfassung von Informationen, wobei ereignis- oder inhaltsgesteuerte Informationen seitens der Anzeigeeinrichtung wiedergebbar sind und wobei die Eingabeeinrichtung (6) wenigstens eine Taste aufweist, durch deren Betätigung wenigstens eine weitergehende Nutzung der ereignis- oder inhaltsgesteuerten Informationen ermöglicht ist, wobei seitens der Taste (13, 14, 15) wenigstens eine in Zusammenhang mit den ereignis- oder inhaltsgesteuerten Informationen endgeräteseitig zur Verfügung stehende Bedienmöglichkeit für eine weitergehende Nutzung der ereignis- oder inhaltsgesteuerten Informationen wiedergebbar ist, dadurch gekenzeichnnet, dass die Taste zur Wiedergabe endgeräteseitig zur Verfügung stehender Bedienmöglichkeiten beleuchtbar ist, die Intensität der Beleuchtung oder die Dauer oder die Frequenz eines eine Signalisierung endgeräteseitig zur Verfügung stehender Bedienmöglichkeiten ermöglichenden Blinkens nutzerindividuell einstellbar oder vorgebbar sind, eine Gewichtung der endgeräteseitig zur Verfügung stehenden Bedienmöglichkeiten zur weitergehenden Nutzung der ereignis- oder inhaltsgesteuerten Informationen einstellbar ist, und die weitergehende Nutzung der Informationen ohne ein zusätzliches Menü oder eine zusätzliche Menüführung durch Betätigung der Taste (13, 14, 15) auslösbar oder bewirkbar ist.

18. Endgerät (1) nach Anspruch 17, **dadurch gekennzeichnet, dass** endgeräteseitig zur Verfügung stehende Bedienmöglichkeiten durch farbige Beleuchtungen signalisierbar sind.

19. Endgerät (1) nach Anspruch 18, **dadurch gekennzeichnet, dass** die Farbe einstellbar oder vorgebbar ist.

20. Endgerät (1) nach Anspruch 19, **dadurch gekennzeichnet, dass** die Farbe nutzerindividuell einstellbar oder vorgebbar ist.

21. Endgerät (1) nach einem der Ansprüche 17 bis 20, **gekennzeichnet durch** eine Wiedergabe endgeräteseitig zur Verfügung stehender Bedienmöglichkeiten seitens der Taste (13, 14, 15) bei oder während eines Vorhandenseins von ungenutzten ereignis- oder inhaltsgesteuerten Informationen.

22. Endgerät (1) einem der Ansprüche 17 bis 21, **dadurch gekennzeichnet, dass** die Gewichtung nutzerindividuell einstellbar ist.

23. Endgerät (1) nach einem der Ansprüche 17 bis 22, **dadurch gekennzeichnet, dass** die Gewichtung nach Personen, Datum, Zeit, Ort oder Häufigkeit von Ereignis oder Inhalt erfolgt.

24. Endgerät (1) nach einem der Ansprüche 17 bis 23, **dadurch gekennzeichnet, dass** die Beleuchtung oder Farbe der Taste (13, 14, 15) veränderbar ist.

25. Endgerät (1) nach Anspruch 24, **dadurch gekennzeichnet, dass** die Beleuchtung und/oder Farbe der Taste (13, 14, 15) in Abhängigkeit von ereignisgesteuerten und/oder inhaltsgesteuerten Informationen oder der Gewichtung veränderbar ist.

26. Endgerät (1) nach einem der Ansprüche 17 bis 25, **dadurch gekennzeichnet, dass** in Zusammenhang mit ereignis- oder inhaltsgesteuerten Informationen endgeräteseitig zur Verfügung stehende Bedienmöglichkeiten für eine weitergehende Nutzung der ereignis- oder inhaltsgesteuerten Informationen seitens der Anzeigeeinrichtung (2, 3) wiedergebbar sind.

27. Endgerät (1) nach Anspruch 26, **dadurch gekennzeichnet, dass** die Wiedergabe der Informationen optisch oder akustisch erfolgt.

28. Endgerät (1) nach einem der Ansprüche 17 bis 27, **dadurch gekennzeichnet, dass** die Bedienmöglichkeiten für eine weitergehende Nutzung der ereignis- oder inhaltsgesteuerten Informationen seitens der Anzeigeeinrichtung (2) in einer mit der wenigstens einen eine entsprechende weitergehende Nutzung der ereignis- oder inhaltsgesteuerten Informationen durch Betätigung ermöglichenden Taste (13, 14, 15) korrespondierenden Form wiedergebbar sind.

29. Endgerät (1) nach Anspruch 28, **dadurch gekennzeichnet, dass** die Bedienmöglichkeiten zur weitergehenden Nutzung der ereignis- oder inhaltsgesteuerten Informationen seitens der Anzeigeeinrichtung (2) in einer mit der wenigstens einen eine entsprechende weitergehende Nutzung der ereignis- oder inhaltsgesteuerten Informationen durch Betätigung ermöglichenden Taste (13, 14, 15) hinsichtlich der Farbe, der Form oder der Position der Taste (13, 14, 15) seitens des Endgerätes (1) oder der Eingabeeinrichtung (6) des Endgerätes (1) korrespondierenden Farbe, Form oder Position wiedergebbar sind.

30. Endgerät (1) nach einem der Ansprüche 17 bis 29, **gekennzeichnet durch** eine Anzeige der Zuordnung der wenigstens einen eine weitergehende Nutzung der ereignis- oder inhaltsgesteuerten Informationen **durch** Betätigung ermöglichenden Taste (13, 14, 15) zu der weitergehenden Nutzung der ereignis- oder inhaltsgesteuerten Informationen **durch** Veränderung der Beleuchtung oder der Farbe der Taste (13, 14, 15).

31. Endgerät nach einem der Ansprüche 17 bis 30, **dadurch gekennzeichnet, dass** die Taste (13, 14, 15) von einer zumindest teilweise berührungssensitiven Anzeigeeinrichtung ausgebildet ist.

32. Endgerät nach Anspruch 31, **dadurch gekennzeichnet, dass** die zumindest teilweise berührungssensitive Anzeigeeinrichtung zumindest teilweise Bestandteil der Anzeigeeinrichtung (2) zur optischen Wiedergabe von Informationen ist.

33. Endgerät (1) nach einem der Ansprüche 17 bis 32, **gekennzeichnet durch** endgeräteseitig eingehende oder abgehende Kommunikationsinformationen als ereignisgesteuerte Informationen.

34. Endgerät (1) nach einem der Ansprüche 17 bis 33, **gekennzeichnet durch** Namen, Rufnummern oder sonstige Adressinformationen als inhaltsgesteuerte Informationen.

35. Endgerät (1) nach einem der Ansprüche 17 bis 34, **dadurch gekennzeichnet, dass** dieses ein in Mobilfunknetzen betreibbares mobiles Endgerät (1), ist.

36. Endgerät (1) nach einem der Ansprüche 17 bis 35, **dadurch gekennzeichnet, dass** dieses zur Ausführung eines Verfahrens nach einem der Ansprüche 1 bis 16 ausgebildet ist.

## Claims

1. A method for operating a terminal (1) which can be used in a mobile radio network and which comprises a display device (2, 3) for the optical or acoustic reproduction of information and at least one input device (4, 5, 6) for gathering information, wherein event-controlled or content-controlled information will be reproduced by means of the display device and wherein the input device (6) at least comprises one key, the actuation of which enables at least one further use of the event-controlled or content-controlled information, wherein at least one operating option for a further use of the event-controlled or content-controlled information, which operating option is available on the terminal in connection with the event-controlled or content-controlled information, will be reproduced by the key (13, 14, 15), **characterized in that**
the key for reproducing operating options which are available on the terminal is illuminated,
the intensity of the illumination or the duration or the frequency of a flashing of the illumination for signaling operating options which are available on the terminal can be user-individually set or predetermined,
a weighting of the operating options for the further use of the event-controlled or content-controlled information, which operating options are available on the terminal, can be set,
and
the further use of the information is activated or caused by actuating the key (13, 14, 15) without any additional menu or any additional menu navigation.

2. A method according to claim 1, **characterized in that** operating options which are available on the terminal are signaled by coloured illuminations.

3. A method according to claim 2, **characterized in that** the colour can be set or predetermined.

4. A method according to claim 3, **characterized in that** the colour can be user-individually set or predetermined.

5. A method according to one of the claims 1 to 4, **characterized by** a reproduction of operating options which are available on the terminal by the key (13, 14, 15), if or when unused event-controlled or content-controlled information is present.

6. A method according to one of the claims 1 to 5, **characterized in that** the weighting can be user-individually set.

7. A method according to one of the claims 1 to 6, **characterized in that** the weighting is carried out according to persons, date, time, place or the frequency of the event or content.

8. A method according to one of the claims 1 to 7, **characterized in that** the illumination or the colour of the key (13, 14, 15) will be changed in dependence on event-controlled or content-controlled information or on the weighting.

9. A method according to one of the claims 1 to 8, **characterized in that** the display device (2, 3) will reproduce operating options for a further use of the event-controlled or content-controlled information, which operating options are available on the terminal in connection with event-controlled or content-controlled information.

10. A method according to claim 9, **characterized in that** the reproduction of the information is optically or acoustically carried out.

11. A method according to claim 9 or claim 10, **characterized in that** the operating options for a further use of the event-controlled or content-controlled information will be reproduced by means of the display device (2) in a form that corresponds to the at least one key (13, 14, 15), the actuation of which enables a corresponding further use of the event-controlled or content-controlled information.

12. A method according to claim 11, **characterized in that** the operating options for a further use of the event-controlled or content-controlled information will be reproduced by means of the display device (2) in a colour, form or position which correspond to the colour, form or position of the at least one key (13, 14, 15), the actuation of which enables a corresponding further use of the event-controlled or content-controlled information, on the terminal (1) or the input device (6) of the terminal (1).

13. A method according to one of the claims 1 to 12, **characterized by** a display of the allocation of the at least one key (13, 14, 15), which enables a further use of the event-controlled or content-controlled information by actuation, to the further use of the event-controlled or content-controlled information by changing the illumination or the colour of the key (13, 14, 15).

14. A method according to one of the claims 1 to 13, **characterized by** communication information incoming on or outgoing from the terminal, preferably calls, SMS, MMS, e-mails or internet services, appointments or reminders as event-controlled information.

15. A method according to one of the claims 1 to 14, **characterized by** names, call numbers or other address information as content-controlled information.

16. A method according to one of the claims 1 to 15, **characterized in that** this one can be transferred as application program to the terminal (1) and be carried out by means of the terminal (1).

17. Terminal (1) for the use in a mobile radio network, comprising a display device (2, 3) for the optical or acoustic reproduction of information and at least one input device (4, 5, 6) for gathering information, wherein event-controlled or content-controlled information can be reproduced by means of the display device and wherein the input device (6) at least comprises one key, the actuation of which enables at least one further use of the event-controlled or content-controlled information, wherein at least one operating option for a further use of the event-controlled or content-controlled information, which operating option is available on the terminal in connection with the event-controlled or content-controlled information, can be reproduced by the key (13, 14, 15),
**characterized in that**
the key for reproducing operating options which are available on the terminal can be illuminated,
the intensity of the illumination or the duration or the frequency of a flashing, which enables a signaling of operating options which are available on the terminal, can be user-individually set or predetermined,
a weighting of the operating options for the further use of the event-controlled or content-controlled information, which operating options are available on the terminal, can be set,
and
the further use of the information can be activated or caused by actuating the key (13, 14, 15) without any additional menu or any additional menu navigation.

18. A terminal (1) according to claim 17, **characterized in that** operating options which are available on the terminal can be signaled by coloured illuminations.

19. A terminal (1) according to claim 18, **characterized in that** the colour can be set or predetermined.

20. A terminal (1) according to claim 19, **characterized in that** the colour can be user-individually set or predetermined.

21. A terminal (1) according to one of the claims 17 to 20, **characterized by** a reproduction of operating options, which are available on the terminal, by the key (13, 14, 15), if or when unused event-controlled or content-controlled information is present.

22. A terminal (1) according to one of the claims 17 to 21, **characterized in that** the weighting can be user-individually set.

23. A terminal (1) according to one of the claims 17 to 22, **characterized in that** the weighting is carried out according to persons, date, time, place or the frequency of the event or content.

24. A terminal (1) according to one of the claims 17 to 23 **characterized in that** the illumination or the colour of the key (13, 14, 15) can be changed.

25. Terminal (1) according to claim 24, **characterized in that** the illumination and/or colour of the key (13, 14, 15) can be changed in dependence on event-controlled or content-controlled information or on the weighting.

26. A terminal (1) according to one of the claims 17 to 25, **characterized in that** operating options for a further use of the event-controlled or content-controlled information, which operating options are available on the terminal in connection with event-controlled or content-controlled information, can be reproduced by the display device (2, 3).

27. A terminal (1) according to claim 26, **characterized in that** the reproduction of the information is optically or acoustically carried out.

28. A terminal (1) according to one of the claims 17 to 27, **characterized in that** the operating options for a further use of the event-controlled or content-controlled information can be reproduced by means of the display device (2) in a form that corresponds to the at least one key (13, 14, 15), the actuation of which enables a corresponding further use of the event-controlled or content-controlled information.

29. A terminal (1) according to claim 28, **characterized in that** the operating options for the further use of the event-controlled or content-controlled information can be reproduced by means of the display device (2) in a colour, form or position which correspond to the colour, form or position of the at least one key (13, 14, 15), the actuation of which enables a corresponding further use of the event-controlled or content-controlled information, on the terminal (1) or the input device (6) of the terminal (1).

30. A terminal according to one of the claims 17 to 29, **characterized by** a display of the allocation of the at least one key (13, 14, 15), which enables a further use of the event-controlled or content-controlled information by actuation, to the further use of the event-controlled or content-controlled information by changing the illumination or the colour of the key (13, 14, 15).

31. A terminal according to one of the claims 17 to 30, **characterized in that** the key (13, 14, 15) is formed by an at least partially touch sensitive display device.

32. A terminal according to claim 31, **characterized in that** the at least partially touch sensitive display device is at least partially a part of the display device (2) for the optical reproduction of information.

33. A terminal (1) according to one of the claims 17 to 32, **characterized by** communication information incoming on or outgoing from the terminal as event-controlled information.

34. A terminal (1) according to one of the claims 17 to 33, **characterized by** names, call numbers, other address information as content-controlled information.

35. A terminal (1) according to one of the claims 17 to 34, **characterized in that** this one is a mobile terminal (1) which can be operated in mobile radio networks.

36. A terminal (1) according to one of the claims 17 to 35, **characterized in that** this one is configured for carrying out a method according to one of the claims 1 through 16.

## Revendications

1. Procédé de fonctionnement d'un terminal (1) utilisable dans un réseau radio mobile, le terminal (1) comprenant un dispositif d'affichage (2, 3) pour la reproduction optique ou acoustique des informations et au moins un dispositif d'entrée (4, 5, 6) pour saisir des informations, des informations dirigées par les événements ou dirigées par le contenu étant reproduites par le dispositif d'affichage, et le dispositif d'entrée (6) comprenant au moins une touche, dont l'actionnement permet au moins une autre utilisation des informations dirigées par les événements ou dirigées par le contenu, au moins une option de fonctionnement pour une autre utilisation des informations dirigées par les événements ou dirigées par le contenu, laquelle option de fonctionnement est disponible dans le terminal en liaison avec les informations dirigées par les événements ou dirigées par le contenu, étant reproduite par la touche (13, 14, 15),
**caractérisé en ce que**
la touche pour la reproduction des options de fonctionnement disponibles dans le terminal est illuminée,
l'intensité de l'illumination ou la durée ou la fréquence d'un clignotement de l'illumination pour signaler des options de fonctionnement, qui sont disponibles dans le terminal peuvent être réglés ou prédéterminés de manière spécifique à l'utilisateur,
une pondération des options de fonctionnement pour l'autre utilisation des informations dirigées par les événements ou dirigées par le contenu, lesquelles options de fonctionnement sont disponibles dans le terminal, peut être réglée,
et
l'autre utilisation des informations est activée ou provoquée par l'actionnement de la touche (13, 14, 15) sans menu supplémentaire ou sans navigation de menu supplémentaire.

2. Procédé selon la revendication 1, **caractérisé en ce que** des options de fonctionnement, qui sont disponibles dans le terminal, sont signalées par des illuminations colorées.

3. Procédé selon la revendication 2, **caractérisé en ce qu'**on peut régler ou prédéterminer la couleur.

4. Procédé selon la revendication 3, **caractérisé en ce qu'**on peut régler ou prédéterminer la couleur d'une manière spécifique à l'utilisateur.

5. Procédé selon l'une des revendications 1 à 4, **caractérisé par** une reproduction des options de fonctionnement, qui sont disponibles dans le terminal, par la touche (13, 14, 15), si ou quand il y a des informations dirigées par les événements ou dirigées par le contenu non utilisées.

6. Procédé selon l'une des revendications 1 à 5, **caractérisé en ce qu'**on peut régler la pondération de manière spécifique à l'utilisateur.

7. Procédé selon l'une des revendications 1 à 6, **caractérisé en ce que** la pondération est effectuée sur base des personnes, de la date, du temps, de la place ou de la fréquence d'un événement ou d'un contenu.

8. Procédé selon l'une des revendications 1 à 7, **caractérisé en ce que** l'illumination ou la couleur de la touche (13, 14, 15) est changée en fonction des informations dirigées par les événements ou dirigées par le contenu ou en fonction de la pondération.

9. Procédé selon l'une des revendications 1 à 8, **caractérisé en ce que** le dispositif d'affichage (2, 3) reproduit des options de fonctionnement pour une autre utilisation des informations dirigées par les événements ou dirigées par le contenu, lesquelles options de fonctionnement sont disponibles dans le terminal en liaison avec des informations dirigées par les événements ou dirigées par le contenu.

10. Procédé selon la revendication 9, **caractérisé en ce que** la reproduction des informations se fait optiquement ou acoustiquement.

11. Procédé selon la revendication 9 ou la revendication 10, **caractérisé en ce que** les options de fonctionnement pour une autre utilisation des informations dirigées par les événements ou dirigées par le contenu sont reproduites par moyen du dispositif d'affichage (2) en une forme, qui correspond à l'au moins une touche (13, 14, 15), dont l'actionnement permet une autre utilisation correspondante des informations dirigées par les événements ou dirigées par le contenu.

12. Procédé selon la revendication 11, **caractérisé en ce que** les options de fonctionnement pour une autre utilisation des informations dirigées par les événements ou dirigées par le contenu sont reproduites par moyen du dispositif d'affichage (2) en une couleur, une forme ou dans une position qui correspond à la couleur, à la forme ou à la position de l'au moins une touche (13, 14, 15), dont l'actionnement permet une autre utilisation correspondante des informations dirigées par les événements ou dirigées par le contenu, sur le terminal (1) ou sur le dispositif d'entrée (6) du terminal (1).

13. Procédé selon l'une des revendications 1 à 12, **caractérisé par** un affichage de l'attribution de l'au moins une touche (13, 14, 15), qui permet une autre utilisation des informations dirigées par les événements ou dirigées par le contenu par l'actionnement de celle-ci, à l'autre utilisation des informations dirigées par les événements ou dirigées par le contenu en changeant l'illumination ou la couleur de la touche (13, 14, 15).

14. Procédé selon l'une des revendications 1 à 13, **caractérisé par** des informations de communication, qui entrent dans le terminal ou qui sortent du terminal, de préférence des appels, des SMS, des MMS, des emails ou des services Internet, des rendez-vous ou des rappels comme des informations dirigées par les événements.

15. Procédé selon l'une des revendications 1 à 14, **caractérisé par** des noms, des numéros d'appel ou d'autres informations d'adresse comme des informations dirigées par le contenu.

16. Procédé selon l'une des revendications 1 à 15, **caractérisé en ce que** celui-ci peut être transféré comme programme d'application au terminal (1) et être réalisé par le terminal (1).

17. Terminal (1) destiné à l'utilisation dans un réseau radio mobile, comprenant un dispositif d'affichage (2, 3) pour la reproduction optique ou acoustique des informations et au moins un dispositif d'entrée (4, 5, 6) pour saisir des informations, des informations dirigées par les événements ou dirigées par le contenu pouvant être reproduites par le dispositif d'affichage, et le dispositif d'entrée (6) comprenant au moins une touche, dont l'actionnement permet au moins une autre utilisation des informations dirigées par les événements ou dirigées par le contenu, au moins une option de fonctionnement pour une autre utilisation des informations dirigées par les événements ou dirigées par le contenu, laquelle option de fonctionnement est disponible dans le terminal en liaison avec les informations dirigées par les événements ou dirigées par le contenu, pouvant être reproduite par la touche (13, 14, 15),
**caractérisé en ce que**
la touche pour la reproduction des options de fonctionnement disponibles dans le terminal peut être illuminée,
l'intensité de l'illumination ou la durée ou la fréquence d'un clignotement pour signaler des options de fonctionnement, qui sont disponibles dans le terminal peuvent être réglés ou prédéterminés de manière spécifique à l'utilisateur, une pondération des options de fonctionnement pour l'autre utilisation des informations dirigées par les événements ou dirigées par le contenu, lesquelles options de fonctionnement sont disponibles dans le terminal, peut être réglée,
et
l'autre utilisation des informations est activée ou provoquée par l'actionnement de la touche (13, 14, 15) sans menu supplémentaire ou sans navigation de menu supplémentaire.

18. Terminal (1) selon la revendication 17, **caractérisé en ce que** des options de fonctionnement, qui sont disponibles dans le terminal, peuvent être signalées par des illuminations colorées.

19. Terminal (1) selon la revendication 18, **caractérisé en ce qu'**on peut régler ou prédéterminer la couleur.

20. Terminal (1) selon la revendication 19, **caractérisé en ce qu'**on peut régler ou prédéterminer la couleur d'une manière spécifique à l'utilisateur.

21. Terminal (1) selon l'une des revendications 17 à 20, **caractérisé par** une reproduction des options de fonctionnement, qui sont disponibles dans le terminal, par la touche (13, 14, 15), si ou quand il y a des informations dirigées par les événements ou dirigées par le contenu non utilisées.

22. Terminal (1) selon l'une des revendications 17 à 21, **caractérisé en ce qu'**on peut régler la pondération de manière spécifique à l'utilisateur.

23. Terminal (1) selon l'une des revendications 17 à 22 **caractérisé en ce que** la pondération est effectuée sur base des personnes, de la date, du temps, de la place ou de la fréquence d'un événement ou d'un contenu.

24. Terminal (1) selon l'une des revendications 17 à 23, **caractérisé en ce que** l'illumination ou la couleur de la touche (13, 14, 15) peut être changée.

25. Terminal (1) selon la revendication 24, **caractérisé en ce que** l'illumination et/ou la couleur de la touche (13, 14, 15) peut être changée en fonction des informations dirigées par les événements ou dirigées par le contenu ou en fonction de la pondération.

26. Terminal (1) selon l'une des revendications 17 à 25 **caractérisé en ce que** le dispositif d'affichage (2, 3) peut reproduire des options de fonctionnement pour une autre utilisation des informations dirigées par les événements ou dirigées par le contenu, lesquelles options de fonctionnement sont disponibles dans le terminal en liaison avec des informations dirigées par les événements ou dirigées par le contenu.

27. Terminal (1) selon la revendication 26, **caractérisé en ce que** la reproduction des informations se fait optiquement ou acoustiquement.

28. Terminal (1) selon l'une des revendications 17 à 27, **caractérisé en ce que** les options de fonctionnement pour une autre utilisation des informations dirigées par les événements ou dirigées par le contenu peuvent être reproduites par moyen du dispositif d'affichage (2) en une forme, qui correspond à l'au moins une touche (13, 14, 15), dont l'actionnement permet une autre utilisation correspondante des informations dirigées par les événements ou dirigées par le contenu.

29. Terminal (1) selon la revendication 28, **caractérisé en ce que** les options de fonctionnement pour l'autre utilisation des informations dirigées par les événements ou dirigées par le contenu peuvent être reproduites par moyen du dispositif d'affichage (2) en une couleur, une forme ou dans une position qui correspond à la couleur, à la forme ou à la position de l'au moins une touche (13, 14, 15), dont l'actionnement permet une autre utilisation correspondante des informations dirigées par les événements ou dirigées par le contenu, sur le terminal (1) ou sur le dispositif d'entrée (6) du terminal (1).

30. Terminal (1) selon l'une des revendications 17 à 29, **caractérisé par** un affichage de l'attribution de l'au moins une touche (13, 14, 15), qui permet une autre utilisation des informations dirigées par les événements ou dirigées par le contenu par l'actionnement de celle-ci, à l'autre utilisation des informations dirigées par les événements ou dirigées par le contenu en changeant l'illumination ou la couleur de la touche (13, 14, 15).

31. Terminal (1) selon l'une des revendications 17 à 30, **caractérisé en ce que** la touche (13, 14, 15) est formée par un dispositif d'affichage au moins partiellement sensible au toucher.

32. Terminal (1) selon la revendication 31, **caractérisé en ce que** le dispositif d'affichage au moins partiellement sensible au toucher fait au moins partiellement partie du dispositif d'affichage (2) pour la reproduction optique d'informations.

33. Terminal (1) selon l'une des revendications 17 à 32, **caractérisé par** des informations de communication, qui entrent dans le terminal ou qui sortent du terminal, comme des informations dirigées par les événements.

34. Terminal (1) selon l'une des revendications 17 à 33, **caractérisé par** des noms, des numéros d'appel ou d'autres informations d'adresse comme des informations dirigées par le contenu.

35. Terminal (1) selon l'une des revendications 17 à 34, **caractérisé en ce que** celui-ci est un terminal mobile (1) utilisable dans des réseaux radio mobile.

36. Terminal (1) selon l'une des revendications 17 à 35, **caractérisé en ce que** celui-ci est configuré pour exécuter un procédé selon l'une des revendications 1 à 16.
